# EUROPEAN PATENT SPECIFICATION

(11) **EP 0 660 214 B1**
(45) Date of publication and mention of the grant of the patent: **04.08.1999**
(21) Application number: 94203708.6
(22) Date of filing: 20.12.1994
(51) Int. Cl.: G05F 1/70, H02J 3/18

(54) **Power factor correcting/filtering set**
Leistungsfaktorkorrektur-/-Filterungsbausatz
Elément de correction/fitrage du facteur de puissance

(30) Priority: 24.12.1993 IT MI931009 U
(43) Date of publication of application: 28.06.1995
(73) Proprietor: ICAR S.p.A., I-20052 Monza, Milano (IT)
(72) Inventor: Folli, Francesco, I-20123 Milano (IT)
(74) Representative: Appoloni, Romano

(56) References cited:
- FR-A- 2 158 247
- US-A- 3 015 059
- US-A- 3 365 657
- REVUE GENERALE DE L'ELECTRICITE, no. 6, June 1988, PARIS FR, pages 3-11, XP002009665 DEHE ET AL.: "Des condensateurs pour tenir la tension et réduire les pertes dans les réseaux d'EDF"
- IRE TRANSACTIONS ON INDUSTRIAL ELECTRONICS, vol. IE-34, no. 2, May 1987, NEW YORK US, pages 266-270, XP002009666 RICHARDS ET AL.: "Cost-Constrained Power Factor Optimization with Source Harmonics Using LC Compensators"

## Description

The present invention relates to an improved power factor correcting/filtering set.

It is well-known that the static, thyristor-based frequency converters distort the alternating current which circulates along the network branch which feeds them.

Every electrical motor, and the relevant converter may be also regarded as representing, as a whole, a generator of harmonic currents.

These harmonic currents mainly cause the following drawbacks:
-- increase in losses by the Joule effect in lines and transformers;
-- vibrations in asynchronous motors;
-- phenomena of resonance between capacitors and the equivalent network reactor, with, as the consequence, overvoltages and overcurrents being generated which can irreparably damage the power factor correcting capacitors and the transformers.

The problem can be solved by means of a power factor correcting/filtering set which comprises a plurality of power factor correcting/filtering units which can be selectively connected to the electrical line as a function of the necessary electrical power for properly improving the power factor. Each unit comprises at least one capacitor and at least one reactor connected in series to said capacitor. The tuning frequency for each power factor improving unit is suitably selected according to whether the operator wishes whether said power factor improving/filtering unit operates as a barrage filter, or as an absorption filter.

The article "Des condensateurs pour tenir la tension et réduire les pertes dans les réseaux d'EDF" published in the "Revue Génerale de l'Electricité" no.6 of June 1988 discloses a method to plan the insertion of condensators in electrical network for finding the optimum combination for power factor compensation at casual electric loads. In this article the tests and instructions for the installation of the condensators are disclosed. Said document is silent about the structure of the reactors.
The article "Cost-Constrained Power Factor Optimisation with Source Harmonics Using LC Compensators" discloses a method for finding the optimum LC combination for power factor compensation at linear loads in the presence of voltage source harmonics while the total voltamperes of the compensator capacitor and reactor is constrained. The document includes examples showing that the cost of such an LC compensator may be less than that of a purely capacitive optimum compensator achieving the same power factor. Said document is also silent about the structure of the reactors.

Therefore, at present, the power factor improving/filtering sets comprise single three-phase reactors, which generally are of the type with iron core, which are individually assembled and therefore require a transition room and an assembly time which should desirably be reduced.

The purpose of the present invention is providing a power factor correcting/filtering set which requires a shorter time to be manufactured and occupies a smaller volume when is applied to the electrical system it must become a part of, thus obviating the above drawbacks.

Such purposes are achieved by a power factor correcting/filtering set according to claim 1.

Arranging the reactors on one single core, so as to form an integrated multiple reactor allows a considerable saving to be achieved as regards labour, and, with its potentiality being the same, the present set requires a smaller intallation room.

The present invention is illustrated for merely exemplifying, non-limitative purposes in the figure of the accompanying drawing table.

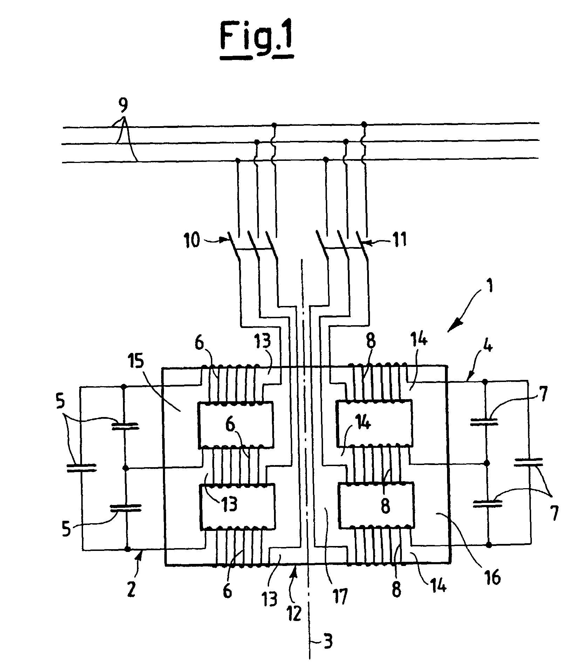

Figure 1 displays a two-step power factor correcting/filtering set according to the present invention, for a three-phase line.

Referring to the above Figure, the power factor correcting/filtering unit, generally indicated with 1, comprises, in the herein exemplified case, a first and a second power factor correcting/filtering units 2 and 3, respectively, which are symmetrically arranged around the symmetry axis 3. The first and the second power factor correcting units 2 and 4, respectively, are selectively connectible to the three-phase electrical line 9 through a first and a second contactors 10 and 11, respectively. In that way, the set 1 is capable of supplying a variable electrical power for power factor correcting and for filtering, thus better fitting the requirements.

The first unit 2 comprises first capacitors 5 with which first reactors 6 are connected. In a similar way, the second unit⁴ comprises second capacitors 7 and second reactors 8. The first and the second reactors 6 and 8, respectively, are placed on the same iron core 12. The core 12 is formed by first and second columns 13 and 14, respectively, connected by first and second yokes 15 and 16, respectively, as well as by a common (i.e., shared) central yoke 17 which has same size and structure as said first and second yokes 15 and 16, and which allows the magnetic flux also generated by a plurality of simultaneously operating reactors, to be closed, i.e. the magnetic flux generated in the core 12 by said reactors 6, 8 is collected by the central yoke 17.

The use of a single core 12 for all of the reactors makes it possible the overall dimensions of the power factor correcting/filtering set to be reduced. Also the assembly is easier, because the single core 12 constitutes the only carrier structure for all of the reactors.

In order to reduce the parasitic currents, the core 12 is formed by a stack of core sheets (not visible in the figure).

By increasing the number of the power factor correcting/filtering units sharing the core 12, the savings increase: in fact, also the number of shared central yokes 17 increases. Furthermore, the power factor correcting/filtering units which compose the set according to the present invention can have different potentialities, so that the flexibility of use of the same set is further increased.

The inductive value of each reactor is calibrated by varying the air gap of each single magnetic circuit.

## Claims

1. Improved power factor correcting and filtering set (1) comprising a plurality of power factor and filtering units (2,4) selectively connectable to an electrical line (9) and comprising at least one capacitor (5, 7) and at least one reactor (6, 8) connected in series to said capacitor, characterized in that said reactors (6, 8) are installed on a same core (12) in which at least one common central yoke (17) is provided, the magnetic flux generated in the core (12) by said reactors (6, 8) being collected by the central yoke (17).

2. Set according to claim 1, characterised in that one or more power correcting and filtering unit(s) (2 and 4) of a set has (have) different potentialities.

## Patentansprüche

1. Verbessertes Leistungsfaktorkorrektur- und Filter-system (1), umfassend eine Mehrzahl von Leistungsfaktor- und Filtereinheiten (2, 4), die wahlweise mit einer elektrischen Leitung (9) verbindbar sind und wenigstens einen Kondensator (5, 7) sowie wenigstens eine in Reihe mit dem Kondensator geschaltete Drossel bzw. Reaktanz (6, 8) umfassen, dadurch **gekennzeichnet,** daß die Drosseln bzw. Reaktanzen (6, 8) auf dem gleichen Kern (12) installiert sind, in welchem wenigstens ein gemeinsames zentrales Joch (17) vorgesehen ist, wobei der durch die Drosseln bzw. Reaktanzen (6, 8) in dem Kern (12) erzeugte Magnetfluß durch das zentrale Joch (17) gesammelt wird.

2. System gemäß Anspruch 1, dadurch **gekennzeichnet,** daß eine oder mehrere Leistungskorrektur- und Filtereinheit(en) (2 und 4) eines Systems unterschiedliche Möglichkeiten bzw. Potentialitäten bzw. Potentiale hat (haben).

## Revendications

1. Elément (1) perfectionné de correction et de filtrage du facteur de puissance, comprenant une pluralité d'unités de correction et de filtrage du facteur de puissance (2, 4) susceptibles d'être connectées, si cela est souhaité, à une ligne électrique (9) et comprenant au moins un condensateur (5, 7) et au moins une réactance (6, 8) reliée en série au condensateur, caractérisé en ce que les réactances (6, 8) sont installées sur un même noyau (12) dans lequel au moins une culasse centrale (17) est prévue, le flux magnétique généré dans le noyau (12) par les réactances (6, 8) étant capté par la culasse centrale (17).

2. Elément selon la revendication 1, caractérisé en ce qu'une ou plusieurs unité(s) de correction et de filtrage de puissance (2 et 4) d'un élément a/ont des potentialités différentes.
